# EUROPEAN PATENT APPLICATION

(11) **EP 2 025 375 A1**
(43) Date of publication of application: **18.02.2009**
(21) Application number: 08161288.9
(22) Date of filing: 28.07.2008
(51) Int. Cl.: A63F 13/00

(54) **Device, cooking game program, and recording medium with the program recorded thereon**

(30) Priority: 30.07.2007 US 952659 P
(71) Applicant: Cooking Mama Limited, Hong Kong (HK)
(72) Inventor: Nagashima, Takeshi, Kowloon (CN)
(74) Representative: Rooney, John-Paul

(57) **Abstract**

The present invention relates to a device for providing a cooking game. The present invention provides, as mini-games, a plurality of preparation processes set up in accordance with a cooking menu and simulates processes for completing the cooking menu. The present invention comprises: providing mini-games to a player; judging and accumulating degrees of achievement in the mini-games; compiling the degrees of achievement accumulated in the mini-games after all mini-games are finished and judging the game result; and displaying a tasting character and then performing animation processing for changing the expression of the tasting character in accordance with the game result and/or displaying a comment in accordance with the game result.

## Description

### BACKGROUND OF THE INVENTION

### FIELD OF THE INVENTION

The present invention relates to a device for simulating cooking processes, a cooking game program, and a recording medium with the program recorded thereon.

### DESCRIPTION OF THE RELATED ART

Because of the recent proliferation of game devices for home use, games that allow a wide variety of experiences have been developed. Among those, a cooking game brings enjoyment of experiencing cooking processes and the possibility of increasing one's repertoire. Since cooking is one of the primary household works, making cooking into a game is meaningful in terms of an enrichment program where, for example, a girl can imitate the works of her mother that the girl sees in her daily life.

A cooking game under the theme of cooking is described, for example, in Japanese Patent Laid-Open No. 2000-262748. In this cooking game, data in relation to recipes and the like of various menus is set up in advance. The player answers multiple-choice questions related to each menu, and the outcome of cooking is competed in accordance with the results of the answers. However, in the cooking game described in the above patent document, the progress of the game is based primarily on the text display, and the result of the game is evaluated by the results of the answers to the questions. This is like a quiz rather than cooking and falls far short of a realistic cooking experience. Regrettably, most of the contents of the conventionally known cooking games are like collections of recipes, and there has been no game whose content is for experiencing and enjoying cooking.

### DISCLOSURE OF THE INVENTION

The present applicant manufactures and sells a device, a cooking game program and a storage medium with the program stored therein in which screen processing is applied to allow a user to experience realistic cooking as compared to conventional games.

When we actually cook, a plurality of preparation processes such as cutting or mixing vegetables, meat, and other ingredients are required for an intended cooking menu. The shapes of the ingredients are continuously changed in the preparation processes, and the shapes are changed by cook's own hands. Thus, these processes are preferably simulated in order to obtain realistic experience in relation to the theme of cooking.

According to the present invention there is provided a device, method and storage medium with the method stored therein as set forth in the appended claims. Other features of the invention will be apparent from the dependent claims, and the description which follows. In this device, a plurality of mini-games are provided for simulating cooking processes set up for each of the cooking menus that the player can select. Examples of the mini-games related to the cooking processes include a mini-game of cutting ingredients such as meat and fish for prescribed times within a prescribed time, a mini-game of stirring ingredients in a bowl for predetermined times within a prescribed time, and a mini-game of cracking a predetermined number of eggs within a prescribed time.

In these mini-games, ingredients (meat, fish, vegetables, etc.) for cooking are displayed as first objects. The player uses input means such as a touch pen and performs an input operation by touching a displayed first object. If the input is proper, animation processing is performed in which the shape of the first object is changed. In this way, the player can obtain feeling of actual cooking works such as cutting or kneading the ingredients. The player can thus enjoy a realistic game.

In the mini-games, whether the player's input operation is proper is judged by two conditions. The first condition requires that the input be performed within an effective range established in an area of the first object.

A preferred setup method of the effective range is that a simple graphic is prescribed in the first object to define the effective range. For example, in one method, based on the center position of the first object, a circle with a predetermined radius from the center position is envisaged to define the effective range. Alternatively, a vertical length may be set up, and a rectangular area depicted on the basis of the vertical length may be envisaged to define the effective range. Furthermore, the first object may be divided into a plurality of small areas (for example, an assembly of a plurality of triangles), and each of the areas may be defined as the effective range. An input into any of the small areas may be regarded as an effective input.

Another condition is that the input trajectory or the input rate satisfies an established reference when there is an input in the effective area within the first object.

A reference trajectory corresponding to the first object for display is established as the reference, and whether the trajectory inputted by the player can be approximated to the reference trajectory is judged. Several methods are prepared for the judgment.

First of all, two virtual points are established in the first object area, and the input trajectory is judged to be able to be approximated to the reference trajectory when the input trajectory passes between the two virtual points (passing between two points judgment).

In another judgment method, two virtual points are established in the first object area, and the input trajectory is judged to be able to be approximated to the reference trajectory when the input trajectory is in a virtual rectangle with two virtual points as vertexes (rectangle judgment).

In another judgment method, one virtual point is established on the game screen, and the angle defined by the line between the starting point of the input trajectory and the virtual point and the line between the end point of the input trajectory upon judgment and the virtual point is calculated. The input trajectory is judged to be able to be approximated to the reference trajectory when the angle is equal to or greater than an established angle (rotation judgment).

There is also a method in which a virtual circle that is movable on the reference trajectory and that is radius-variable is established, and the input trajectory is judged to be able to be approximated to the reference trajectory when the input trajectory is in the virtual circle (operation direction judgment). In this method, a virtual circle is placed at the starting point of the reference trajectory and an input to the circle is waited. When there is an input, the center of the virtual circle is moved along with the movement of the input trajectory. The operation is determined to be ineffective and the input trajectory is unable to be approximated when the input trajectory goes out of the virtual circle. Making the radius of the virtual circle variable gives more latitude to the condition setting, while making the radius of the virtual circle larger in accordance with the movement of the virtual circle increases the likelihood of obtaining the judgment that the input trajectory can be approximated to the reference trajectory.

Whether to perform the animation processing of the first object is judged based on whether the input trajectory can be approximated to the reference trajectory as described, and in addition, the judgment may be based on the input rate. This is used for the judgment of the input operation in which acts such as mincing or finely cutting are expected during cooking. The input rate denotes either the number of inputs per time (the number of touches when inputting with a touch panel, which will be described below) or the speed of forming one input trajectory (speed of the stroke inputs when inputting with a touch panel). In relation to the judgment of the former, the input rate is measured on the basis of either the number of inputs within a certain time or the time required for a certain number of times of inputs. The input rate and the reference input rate established in advance are compared to judge that the input rate equal to or greater than the reference input rate is acceptable.

Mini-games provided in the present invention further comprise a second screen display step of displaying a second object. This screen processing is for displaying hand or cooking utensils (a knife or the like), for cooking the first objects (ingredients), as second objects. Upon the execution of the first screen display step, the second screen display step performs the animation processing for changing the display positions of the second objects before and after or at the same time as the first screen display step. In this way, it looks as if the animation processing of the first objects is a result of the animation processing of the second objects, thereby offering visual effects such that it looks as if the ingredients are changed (cooked) by the works of the cooking utensils.

The present invention further comprises a step of displaying an instructing object that suggests an input operation of the player. This is for providing the player an indicator of input, thereby promoting the smooth progress of the game. Examples of the instructing object to be displayed include, in relation to a cutting operation, an arrow that indicates a cutting direction in the first object area and a dotted line that indicates a cutting line.

The cooking game of the present applicant judges the success of the game in individual mini-games in a form of a degree of achievement. The degree of achievement refers to a ratio of how much the operation quota such as the number of times of cutting the ingredients or the number of times of cracking the eggs is achieved within a play time prescribed for each mini-game. After the evaluation, the degree of achievement is internally (programmatically) digitalized and accumulated in the game device. After the mini-games, a comment such as "very good", "good", or "bad", is displayed on the screen to the player in accordance with the degree of achievement. Therefore, the player can sensuously recognize the results of the mini-games.

The player consecutively plays the plurality of mini-games as described above, and as a consequence, the player completes a cooking menu. After all mini-games are played, the degrees of achievement of the mini-games are compiled to judge the game result, and the game result in relation to the cooking menu is presented to the player. A simple way to present the game result is to display with scores.

Cooking, by nature, should be evaluated by the taste, and the evaluation by scores as described is tasteless. On the other hand, expressing the taste in a game, which has a two-dimensional form, is extremely difficult.

In the cooking game of the present applicant, characteristics of a cooking game which handles cooking are taken into account. In relation to the evaluation of the result, a character who tastes the cooking menus completed by the player is displayed, and the result is evaluated.

Animation processing is performed in which the expression of the tasting character is changed in accordance with the game results obtained by compiling the accumulated degrees of achievement in the mini-games. Evaluation comments such as "delicious" and "very delicious" are also displayed.

With the application of such tasting characters, the play result of the player can be evaluated by taste, though indirectly. As a result, the effects conforming to the theme of cooking can be obtained.

A plurality of tasting characters may be prepared. In this case, a database related to the plurality of tasting characters is included in the game program, and the player is made to select a tasting character before the first mini-game.

When preparing a plurality of tasting characters as described, common evaluation criteria in relation to which comment or expression will be displayed may be used for all tasting characters. Alternatively, evaluation data of comments and the like may be created and allocated to each tasting character. The total degrees of achievement of the mini-games may be simply evaluated and used without change. Alternatively, modification parameters may be used for each degree of achievement of the mini-games to cause the degree of achievement of a specific mini-game to affect the evaluation of the tasting character. Devising the evaluation system this way enables to obtain a wide variety of evaluations by the tasting characters.

The degree of achievement in a mini-game can be judged by the ratio of the times of operations reaching the acceptance criteria within a time limit in relation to established operation quota such as the number of times of cutting of the ingredients (meat, fish, vegetables, and so forth), the number of times of cracking the eggs, or the number of times of stirring (rotating). Thresholds in relation to the degrees of achievement can be set up for individual mini-games, and the comments to be displayed when one mini-game is finished can be sorted. For example, a threshold is set up at 50%, and when the degree of achievement exceeds this, a positive comment such as "very good" or "good" is displayed. When the degree of achievement is below the threshold, a negative comment such as "no good" or "bad" is displayed.

As for the display (change in expression and comment) of the evaluation of the game result of the entire cooking menu by the tasting character, the degrees of achievement may be required to surpass the threshold in all mini-games in order to display a positive change in expression and a positive comment. On the other hand, when a degree of achievement is below the threshold in any of the mini-games, the game may immediately shift to the stage for displaying the tasting character without shifting to the planned next mini-game (game over), and a negative evaluation comment ("I can't eat it" or the like) may be displayed. Under these settings, a sense of tension similar to that in actual cooking can be experienced.

However, severe game conditions as described above are not necessarily preferable for beginners of the game or children. A game is just a game. While the reality is important, players enjoy completing the game as well.

Consequently, the game of the present invention comprises two game modes to accommodate a wide variety of players, from beginners to advanced players.

In a first game mode (hereinafter, occasionally referred to as mommy mode), the degree of achievement of the player is adjusted. Specifically, when the degree of achievement is below the threshold, the degree of achievement is adjusted to surpass the threshold. As a result, when the player fails in one mini-game, the game is not over at that point, and the player can play the next mini-game. A positive comment is also easier to obtain upon the display of the evaluation comment by the tasting character after all mini-games.

Meanwhile, in a second game mode (hereinafter, occasionally referred to as attack mode), the game is progressed in a normal way without adjusting the degrees of achievement in the series of mini-games, and the result of the performance of the player is reflected, without change, on the degree of achievement in each mini-game. The result of the performance of the player is also reflected, without change, on the evaluation comment by the tasting character. This game mode is included in consideration of advanced players and people who want to experience realistic cooking.

Upon the play of one cooking menu, the implementation of the two game modes allows for the beginners and younger children who are unskillful in input operations to play the last mini-game without the game ending in the middle.

The cooking game of the present application comprises a step of granting an item from a tasting character to the player after the evaluation by the tasting character. Granting of the items contributes to the player developing an attachment to the player's game history through obtaining and collecting the items in individual games, in addition to the evaluation by the score or the expression of the character. The items also function as tools (stickers) for the player to freely decorate the game screen, which will be described later.

In the cooking game of the present application, the results of the plays described above can be stored. The game results can be stored for individual cooking menus, and kinds of tasting characters, evaluations (expressions), kinds and numbers of granted items, and so forth are stored.

In this storage mode, the player can browse the contents at any time aside from the play of the game. The game program provides a saved content view screen which can be selected by the player.

The player can customize the appearance of the saved content view screen. Specifically, the player can change the display positions of the granted items on the saved content view screen. No limitation is established for the change in the display positions, and the items can be moved or displayed at any position within the screen. A wide variety of decorations based on the personality and the world-view of the player can be provided on the game screen by completely leaving the player to determine the display positions of the items.

The cooking game program described above can be stored in an optical recording medium such as a magnetic recording medium, a memory card, a CD, a DVD, or the like. The game device can be constructed by installing a recording medium on a game device for home use, a portable game device, or a personal computer.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 depicts a game device according to one embodiment of the invention;
FIG. 2 is a schematic diagram of a hardware configuration of the game device of FIG. 1;
FIG. 3 depicts one example of a memory map of the invention;
FIG. 4 is a flow chart of a game progress after game execution is selected;
FIG. 5 is a flow chart depicting the progress of a mini-game;
FIG. 6 is a top menu for selecting a game mode;
FIG. 7 is a screen for selecting a cooking menu;
FIG. 8 is a screen for selecting a tasting character;
FIG. 9 shows an initial game screen just after the start of a first mini-game;
FIG. 10 is an initial game screen for a second mini-game;
FIG. 11 is an initial game screen for a third mini-game;
FIG. 12 is an initial game screen of a fourth mini-game;
FIG. 13 is a screen which is displayed upon completion of all the mini-games;
FIG. 14 shows the tasting character in a tasting mode;
FIG. 15 shows the results of a tasting by the tasting character;
FIG. 16 shows a saving location selection screen;
FIG. 17 shows a saved content view screen;
FIG. 18 shows a process selection screen;
FIG. 19 shows a screen for selecting data to be edited;
FIG. 20 shows a screen for selecting processes in an edit mode;
FIG. 21 shows a screen for selecting a sticker; and
FIG. 22 shows a sticker displayed on the screen.

### BEST MODE FOR CARRYING OUT THE INVENTION

The preferred embodiments of the present invention will now be described.

A memory card stored with a cooking game program is provided in the present example. The game program is loaded onto a game device through the memory card and functions as a cooking game device.

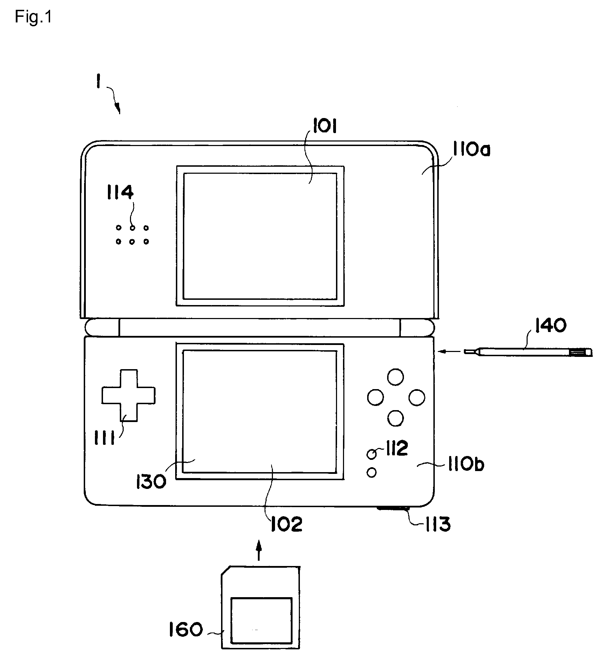

FIG. 1 depicts a game device of an example of the present invention. In FIG. 1, a game device 1 comprises an upper case 110a and a lower case 110b, and the cases can be folded and overlapped for storage. Liquid crystal displays 101 and 102 are respectively provided on the upper case 110a and the lower case 110b. In the present example, the liquid crystal display 102 serves as a game screen for displaying first objects. Touch panels 130 are provided on the surfaces of the liquid crystal displays. Any of a resistive film system, an optical system, and an electrostatic capacitive coupling system can be applied to the touch panels 130. A touch pen 140 for operating the touch panels is also included. The touch pen 140 can be accommodated in the lower case.

The lower case 110b comprises arrow keys 111 and keys 112 such as a power switch. These keys are not used for the progress of the game, but are used for supplying power, selecting the game menu, or for operation of other game programs. The lower case 110b also comprises a microphone 113 that allows voice input from the player. This allows input from a device other than the touch pen or the key operation. The upper case 110a further includes a speaker 114 that generates game BGM and sound effects.

A memory card 160 can be mounted on the lower case from above and is exchangeable with memory cards having other programs stored therein.

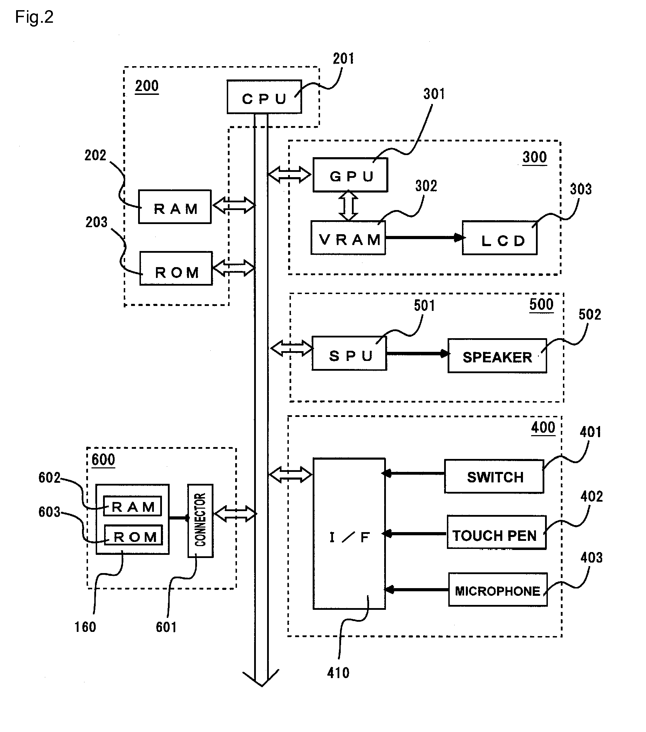

FIG. 2 depicts a hardware configuration of the game device 1. The game device 1 comprises a main control unit 200, an image processing unit 300, an input control unit 400, a sound control unit 500, and an external memory control unit 600.

The main control unit 200 comprises a CPU 201, a RAM 202 that temporarily stores game programs, image data, sound data, and the like, and a ROM 203 that manages the image processing unit 300 and the like. The CPU 201 controls the entire device, executes a game program in the RAM 202, and advances the game.

The image processing unit 300 comprises: a GPU (graphic processing unit) 301 that draws images based on the drawing instruction from the CPU 201 and the image data in the RAM 202; and a VRAM 302 that temporarily stores the images depicted by the GPU 301. The image data created by the GPU 301 is outputted to a liquid crystal display (LCD) 303 through the VRAM 302.

The input control unit 400 comprises switches 401 such as the operation switch 111 arranged on the lower case 110b, input means such as a touch pen 402 and a microphone 403, and an interface 410 thereof. When there is an input by the touch pen 402, the position coordinate data on that occasion is inputted to the CPU 201 through the interface 410.

The sound control unit 500 comprises: an SPU (sound processor unit) 501 that generates game BGM, sound effects, and the like based on the sound data of game BGM, sound effects, and the like stored in the RAM 202; and a speaker 502 that outputs sound effects and the like generated thereby.

The external memory control unit 600 comprises a connector 601 to which game programs (data) stored in the memory card 160 are connected. The memory card 160 comprises a RAM 602 and a ROM 603 which are connected by a bus and connected to the CPU 201 through the connector 601. The CPU 201 can record various data in the RAM 602 when the interim results (completed menus or the like) in accordance with the progress of the game need to be recorded.

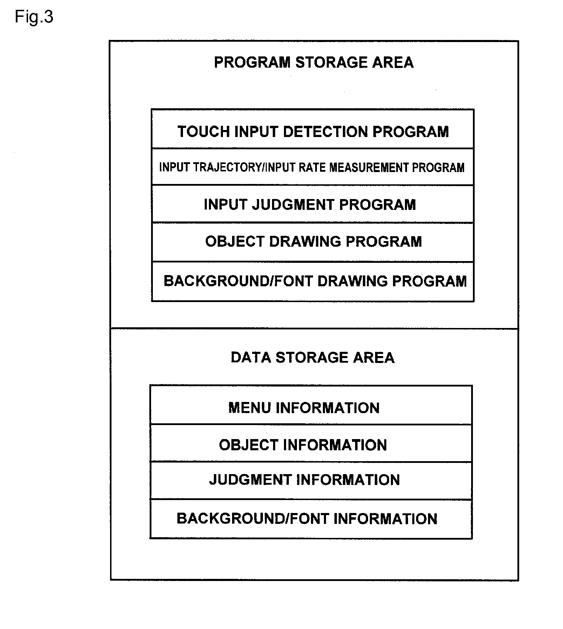

FIG. 3 depicts one example of a memory map of the present example. The memory map includes a program storage area and a data storage area. FIG. 3 only illustrates the memory map for advancing the game in relation to the present example.

The program storage area stores programs for detecting the presence of input with the touch panel and the position coordinates to thereby measure the input trajectory, programs for judging the suitability of the position coordinates of the input and for judging the input trajectory and the input rate, and programs for controlling the animation processing of the objects and characters.

Data related to a plurality of cooking menus are stored in the data storage area. In the cooking game of the present example, a plurality of cooking menus (hamburger steak, curried rice, pizza, etc.) are established. A plurality of cooking processes are established in each cooking menu, and each cooking process is in a form of a mini-game.

For example, when "hamburger steak" is selected as a cooking menu, cooking processes such as (1) a process of roughly cutting the ingredients (linearly cutting process), (2) a process of chopping the ingredients (finely cutting process), (3) a patty manufacturing process (ingredient mixing process), and (4) a grilling process are set up. Mini-games corresponding to these processes are progressed to complete the selected cooking menu. The contents of the cooking processes executed until the menu is completed and the input modes (cut, mix, and the like) are stored in the data of each menu.

Image data (initial, after animation processing) of first objects in cooking processes in relation to the menus, image data of second objects, and image data of tasting characters are stored in the object data. In the judgment data, in relation to the first objects, an effective range and a reference trajectory/a reference input rate that are judgment conditions of input are stored as well as the conditions for evaluating the results.

The cooking game of the present embodiment displays a selection screen of the game menu upon startup and provides selections such as "game execution" and "game setting".

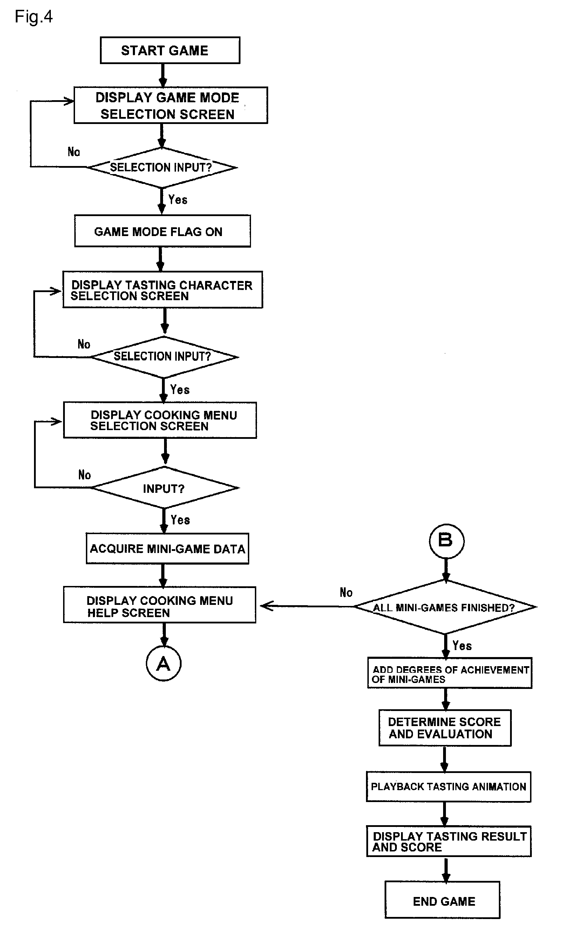

FIG. 4 is a flow chart of the game progress after the game execution is selected. The process first waits for the selection of a game mode (first or second), and when a game mode is selected, the flag of either one of the modes is turned on. In the present example, a plurality of tasting characters (friends) are provided, and the player can select a tasting character. The selection screen of the cooking menus is then displayed, and the process waits for the select input of a cooking menu by the player. After a cooking menu is selected, data such as kinds, contents, and quota of the cooking processes (mini-games) are loaded from the data storage area in accordance with the selected cooking menu, and a mini game is started. A flow chart of the mini-games will be described later.

After one mini-game is finished, whether a remaining mini-game exists is judged. When there is a remaining mini-game, the help screen of the cooking menu is displayed, and the mini-game is again started. When there is no remaining mini-game and all mini-games are finished, the tasting character conducts evaluation and displays score.

After finishing all mini-games, the evaluation is performed based on the score in which the scores in accordance with the degrees of achievement in the mini-games are added up and the total value is divided by the number of mini-games executed. The evaluation provides an evaluation comment group in a plurality of levels having certain score ranges.

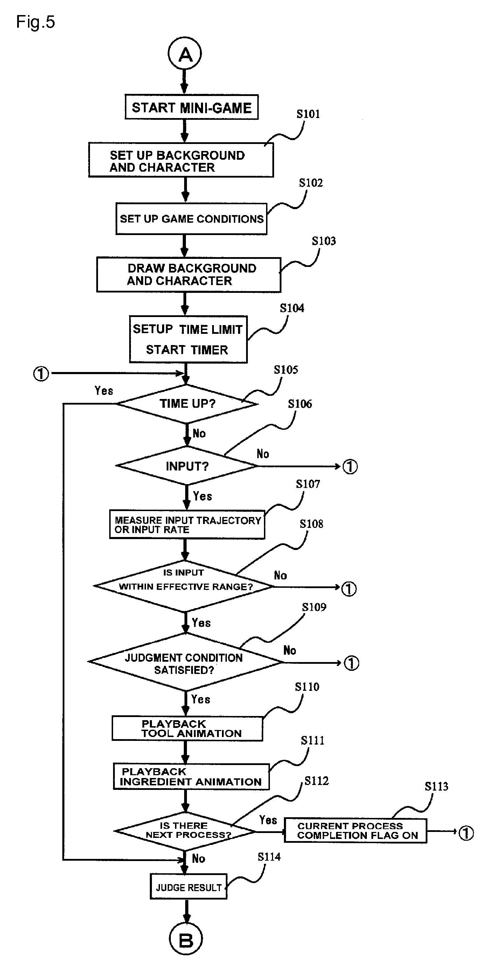

A fundamental procedure in relation to the mini-games will be described with reference to FIG. 5. In FIG. 5, a mini-game is started when the player selects a menu. Data related to the characters of the first objects, the second objects, and the like and the game backgrounds is searched and loaded, and the drawing positions, shape data, and the like of each character and background are set up (step S101). After the game conditions such as inputs, reference trajectory, and completion requirements required in the mini-game are established (step S102), a background and characters are depicted on the display (step S103). The time limit of the mini-game is set up, and the timer is started (step S104). The process then waits for the player's input (step S106). Meanwhile, whether the time has run out is judged (step S105). The mini-game is finished and the result is judged if the answer is Yes, and if the answer is No, the process waits for the player's input.

When there is an input in the input waiting step S106, the input trajectory or the input rate is measured based on the inputted coordinate data (step S107). The input trajectory can be measured from the input coordinates in the current measurement step and the end point of the input trajectory measured in the previous measurement step. The input rate is measured by counting the inputs in the current measurement step, adding the count with the number of cumulative triggers in the previous measurement step, and then comparing the resultant with the number of triggers defined as the reference input rate.

After measuring the input trajectory in step S107, whether the input is within the effective range set up in the first object is determined. As for the setting of the effective range, the coordinate range of the effective range is virtualized in the first object based on the setting conditions of the loaded effective range in the condition setting of step S102, and whether the coordinates upon input is in the coordinate range is determined (step S108). If the coordinates are not in the coordinate range of the effective range (when the judgment is No), it is determined that there is no effective input, and the process returns to the time-up judgment (step S105). If the input is effective, an input judgment step S109 compares and judges the input trajectory and the reference trajectory (input rate and reference input rate). The judgment conditions are defined in the setting conditions of the character setting of step S101.

If it is judged that the input trajectory can be approximated to the reference trajectory in the input judgment step S109, or if it is judged that the input rate is equal to or greater than the reference input rate, the condition is satisfied. Consequently, animation processing of the tools (second objects) is performed (step S110), and animation processing of the ingredients (first objects) is performed (step S111).

A plurality of processes exist in one mini-game, such as repeatedly cutting the ingredients. Thus, completion flags are set for the processes completed at this point, and the process again waits for an input (steps S112 and S113). When all processes in the mini-game are finished or when the time has run out, the achievement rate and the like are judged, and a termination process is performed (step S114). The judgment result at this point is recorded and used for the result judgment when all mini-games are finished. In the judgment process of step S114, when the attack mode (first game mode) is selected as the game mode, the achievement rate is stored without change. On the other hand, when the mommy mode (second game mode) is selected, the threshold established for each mini-game and the player's achievement rate are compared. When the achievement rate is lower than the threshold, the achievement rate is adjusted to the threshold.

The progress of the cooking game in accordance with the procedure described above will now be described along with specific examples of the game screen. A series of flows will be described including a screen upon startup, game screens of a plurality of mini-games after the cooking menu is selected, and an evaluation screen of the game results evaluated by the tasting character after all mini-games are finished.

### A. Initial menu screen upon startup of the game

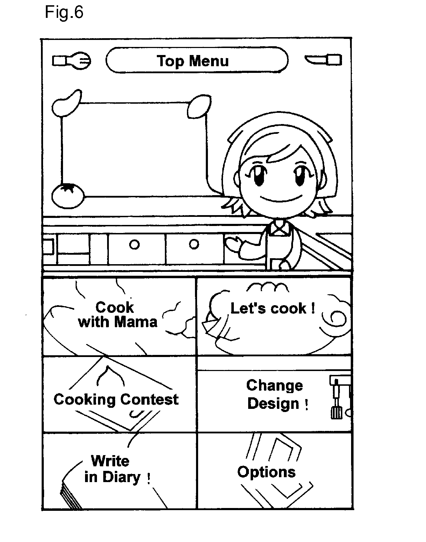

When the game is started up, the top menu as shown in FIG. 6 is displayed. In the top menu, buttons for selecting the game start (two uppermost buttons), a button for shifting to a mode for browsing the stored game results to be described below (lowermost left side), a button for shifting to a mode for setting a game operation method or the volume of sound (lowermost left side), and a button for shifting to a mode for changing the design of the game screen (right side in the middle) are displayed. In this cooking game, the player can establish a wide variety of settings. For example, in relation to the design of the game screen, the player can change the costume of the displayed characters, colors of the cooking utensils, the background, and the like in accordance with the player's preference. The settings are stored even after the power of the game device is turned off.

The game mode is selected on this top menu screen. Among the two buttons (uppermost two buttons) described above for selecting the game start, the button illustrated as "Cooking with mom" is a selection button of the "mommy mode". Meanwhile, the button illustrated as "Provide a feast" is for selecting the "attack mode". The player touches one or the other button for selecting the game mode. In the example below, the process of the game progress when the "attack mode" is selected will be mainly described.

### B. Cooking menu selection screen

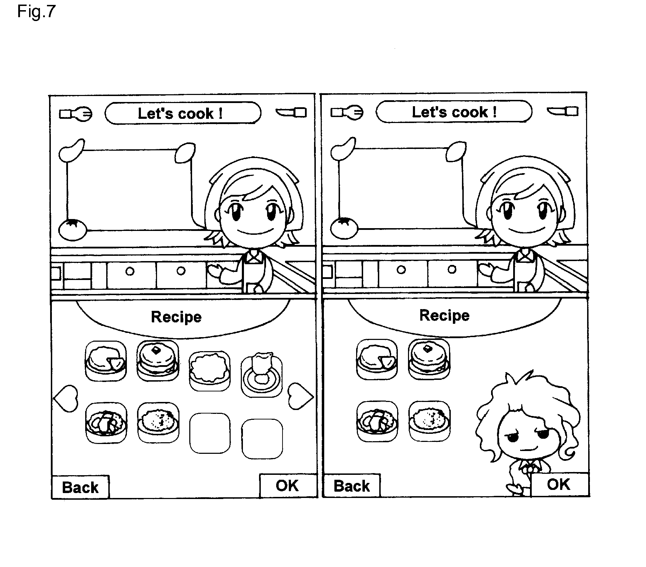

Once a game mode is selected on the top menu of FIG. 6, a screen for selecting a cooking menu to be played is displayed (FIG. 7). In this selection screen, icons of a plurality of cooking menus are displayed, and the player touches and selects, with the touch pen, a cooking menu that the player wants to play (cook).

### C. Tasting character selection screen

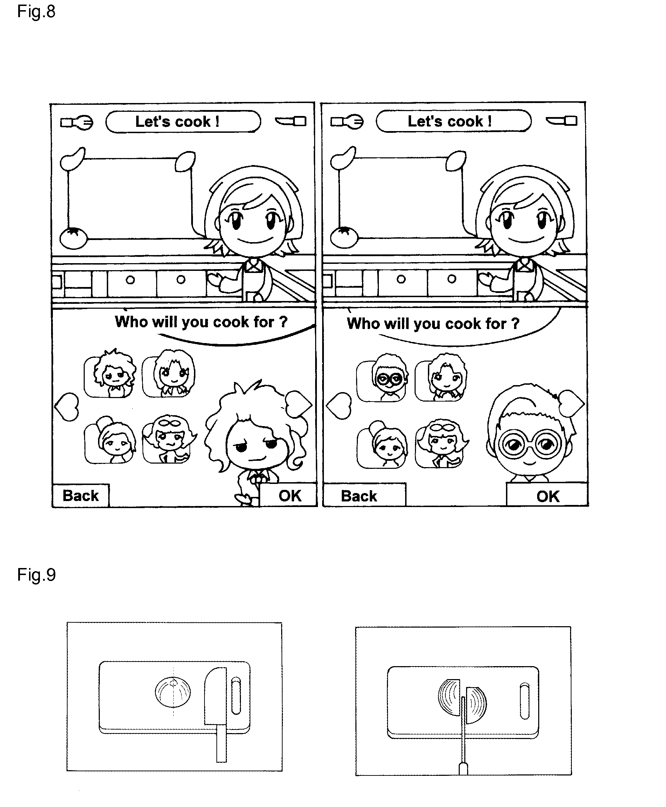

After a cooking menu is selected, a screen for selecting a tasting character is displayed (FIG. 8). Icons of reduced tasting characters are displayed on the selection screen, and the player touches and selects, with the touch pen, a character that the player wants to have the meal tasted (provide a feast).

### D. Play of mini-games

After the foregoing various selections, mini-games are started. A flow of when "hamburger steak" is selected as a cooking menu will be described hereinbelow.

### (i) Mini-game 1: ingredient roughly cutting process

FIG. 9 depicts the initial game screen just after the start of the mini-game. The first object in this process is onion, and the player's input operation is to linearly stroke the touch pen within the range of the first object. The game screen of FIG. 9 displays a knife as a second object and a cutting line (dotted line) as an input instructing object for guiding the place to cut.

A rectangular area depicted based on the center position of the first object is established as the effective range set up in the area of the first object. The same line as the cutting line serving as the input instructing object is envisaged as the reference trajectory, and two points envisaged at equal distances from the center are prescribed. It is judged that the input trajectory has passed the reference trajectory when the input trajectory passes through the two virtual points.

Once the judgment condition is satisfied, the animation processing is performed in which the knife, a second object, is moved. Then, the animation processing is performed in which the onion, a first object, is cut into half.

As for the evaluation in the mini-games described above and below, the value in which the whole score in one cooking menu is divided by the number of mini-games included in the cooking menu is set up as the perfect score of each mini-game, and scores in accordance with the degrees of achievement in mini-games are recorded. For example, hamburger steak, the cooking menu of the present embodiment, consists of four mini-games. If the perfect score of the cooking menu is 100, the perfect score of each mini-game is 25. In relation to the degree of achievement in the ingredient roughly cutting process, for example, if the quota is to perform five cutting operations, the score of the mini-game is obtained by dividing the number of successful cuttings (the number of operations that can be approximated to the reference trajectory) by the quota (five), and the value thus obtained (this is the degree of achievement) is multiplied by the perfect score (25).

The achievement rate is calculated after the mini-game, and a comment such as "very good" or "good" is displayed accordingly. The score in the mini-game may be displayed or may not be displayed. The display of the evaluation is conducted in the same manner in other mini-games described below.

### (ii) Mini-game 2: ingredient chopping process

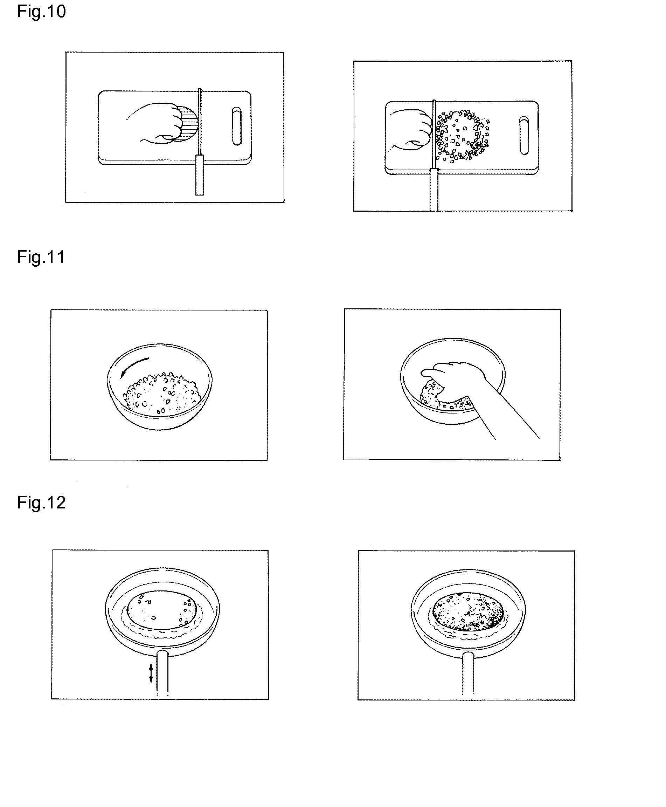

FIG. 10 depicts the initial game screen in this mini-game. The first object in this process is an image of roughly cut onion. The input operation of the player is to consecutively tap with the touch pen within the range of the first object. The game screen in FIG. 10 also displays a knife as the second object.

Although the procedure in this process is fundamentally the same as the procedure in the roughly cutting process, the judgment condition of input is based on the input rate. More specifically, the number of touches and the time of touching are measured, and the input rate is obtained from the time of touching at the point where the number of touches has reached a certain number. The condition is determined to be satisfied if the input rate is higher than the prescribed reference rate. Once the judgment condition is satisfied, the animation processing is performed in which the knife, a second object, is moved. Then, the animation processing is performed in which finely chopped onion is displayed. Images of onion different in the fineness may be displayed depending on the time interval of the touch inputs.

The evaluation of this mini-game is based on the value obtained from the following. A certain number of touch inputs is defined as quota, the number of touches by the player is divided by the quota, and the value thus obtained is multiplied by the perfect score in this mini-game (25).

### (iii) Mini-game 3: patty manufacturing process (ingredient mixing process)

FIG. 11 depicts the initial game screen in this mini-game. The first object in this process is patty (ground meat) that is put in the bowl serving as a background. The player's input mode is to stroke the touch pen vertically, horizontally, or circularly in the range of the first object. The game screen in FIG. 11 displays hand as the second object and an arrow as the input instructing object that indicates operation directions.

Although the procedure in this process is fundamentally the same as the procedure in the roughly cutting process, the rotation measurement or the operation direction judgment are applied as a judgment method of the input trajectory. The rotation judgment is, as described, based on the angle measurement of the input trajectory in which one virtual point is set up on the game screen, and the operation direction judgment is based on a virtual circle on the reference trajectory. Once the input trajectory satisfies the judgment condition, the animation processing is performed in which the hand, a second object, is moved. Then, the animation processing is performed in which the patty in the bowl is rotated or deformed.

The evaluation of this mini-game is based on the value obtained by the following. A certain number of times of stirring is defined as quota, the number of inputs the player has succeeded is divided by the quota, and the value obtained is multiplied by the perfect score in this mini-game (25).

### (iv) Mini-game 4: grilling process

FIG. 12 depicts the initial game screen of this mini-game. The first object in this process is an image of the patty of hamburger steak placed in a frying pan. The player's input mode is reciprocating strokes in the range of the first object. The judgment of the input trajectory is based on the passing between two points judgment, and whether the input trajectory has passed between the two established virtual points is judged. If the judgment condition is satisfied, the patty as a first object is flipped, and the animation processing is performed in which the brown back side appears. In this mini-game, the time of the formation of the input trajectory may be measured to measure the input rate, and the animation processing may be altered depending on the input rate. For example, if the movement speed is too fast, an image of the patty popping out from the flying pan may be displayed, and if the input rate is slow, an image of the patty just shaking without flipping may be displayed.

### E. Evaluation by tasting character

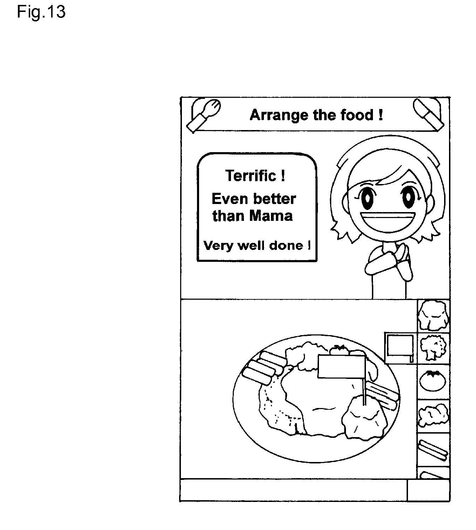

After all the mini-games are played, an image of a finished hamburger steak is displayed (FIG. 13). The scores of the mini-games are added, and an average value is obtained by dividing the total value by the number of mini-games. The evaluation is determined from the average value.

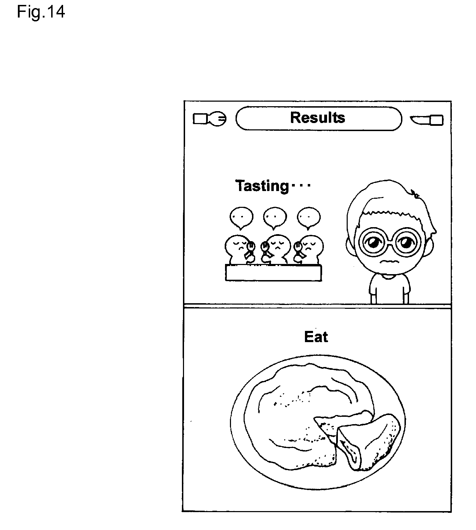

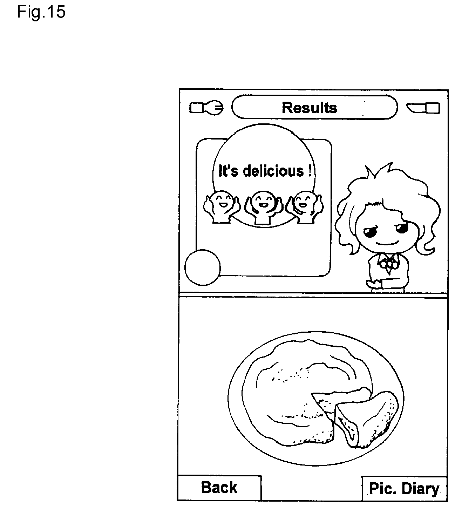

When the tasting character evaluates, the animation processing is performed in which the tasting character moves its mouth and eats the meal. An expression of the tasting character and a comment in accordance with the average value are displayed (FIGS. 14 and 15).

### F. Granting item

In the present example, other than the evaluation of the game result by the tasting character, an item is granted for decorating the game result save screen, which is described below, in accordance with the total number of bonus points obtained in the mini-games. The bonus points that can be obtained in the mini-games are generated when the score is perfect or greater than a predetermined ratio.

### G. Game result saving and browsing mode

### (i) Game result saving

After the evaluation by the tasting character and the grant of the item, the game result in relation to the cooking menu can be saved.

In FIG. 15, after the evaluation by the tasting character, a button for saving and a button for finishing the game without saving are displayed at the bottom of the screen. In this screen example, a button "Pic. Diary" is displayed as the button for saving, while a button "Back" is displayed as the button for finishing the game. When "Back" is touched, the game ends, and the process returns to the top menu (FIG. 6). When "Pic. Diary" is touched, the process moves on to the next saving location selection screen.

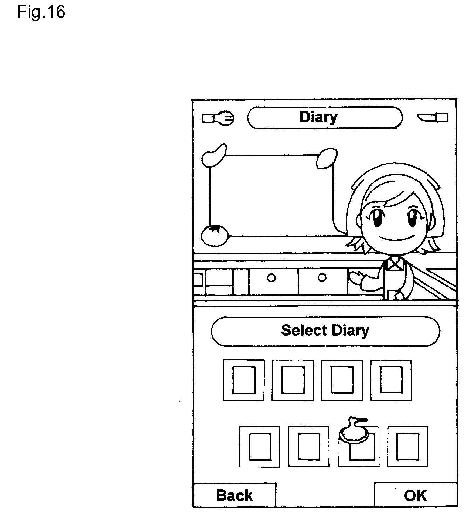

When "Pic. Diary" is touched, the saving location selection screen for saving the created recipe is displayed as shown in FIG. 16. The locations for saving are displayed with icons of books. Dark icons indicate unsaved locations, while bright icons indicate saved locations. When any of the bright icons is touched, the process moves on to the saved content view screen.

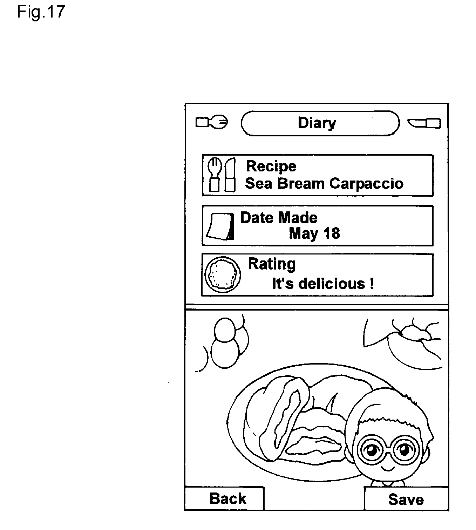

FIG. 17 depicts the saved content view screen. The saved contents include "Final drawing of cooked recipe", "Selected tasting character", "Name of recipe", "Date cooked", and "Evaluation". When "Save" button for saving is touched, the data is saved, and the saving screen is terminated. The process then returns to the top menu.

### (ii) Browsing and editing saved contents

The saved game results can be browsed, edited, and deleted. For these operations, "Write in diary" from the top menu (FIG. 6) is first touched.

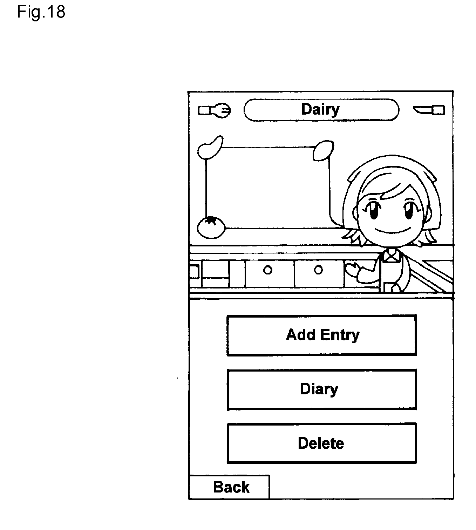

FIG. 18 depicts a process selection screen in this mode. The following buttons are displayed in this screen.
(a) "Add Entry": a button for editing a saved diary file.
(b) "Diary": a button for browsing a saved diary file.
(c) "Delete": a button for erasing a saved diary.

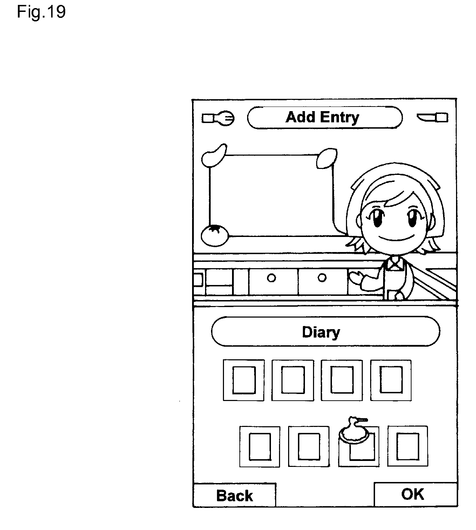

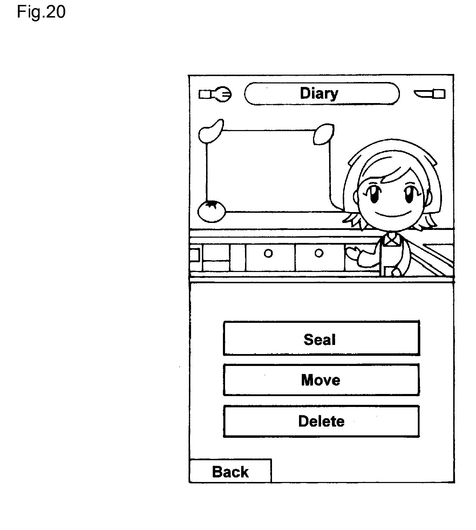

When the player touches (a) "Add Entry" on the selection screen, a screen for selecting data to be edited is displayed (FIG. 19). The data to be edited is selected by touching an icon of book in FIG. 19. Once a selection is made, a screen for selecting processes in the edit mode is displayed (FIG. 20). The displayed processes are as follows.
- "Seal": selecting a sticker to be put among stickers possessed by the player and then putting (displaying) the sticker on the screen.
- "Move": changing the display position of a sticker already put on the screen.
- "Delete": peeling off (deleting) a sticker already put on the screen.

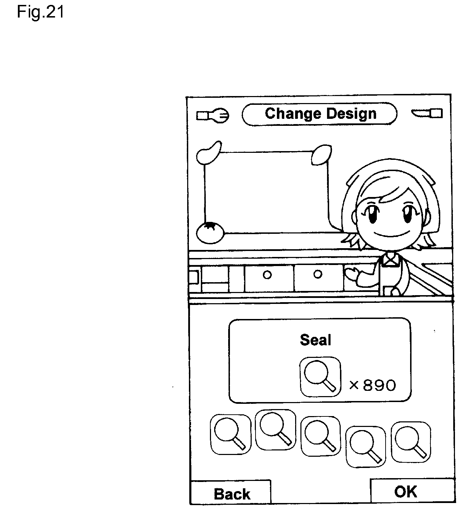

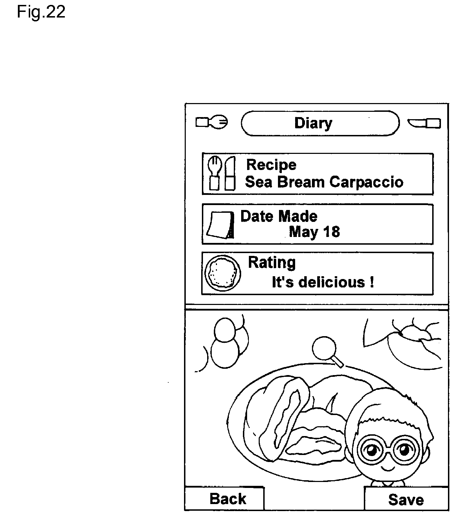

FIG. 21 depicts a screen for selecting a sticker when "Seal" is touched. When the player selects and touches a desired sticker, the sticker is displayed on the screen (FIG. 22). The sticker flickers when the player touches the sticker, and the sticker can be moved by dragging with the touch pen. The sticker can be put anywhere on the lower part of the screen.

A sticker already put can also be moved. In this case, an edit screen is displayed by selecting (touching) "Move" on the screen of FIG. 20. The sticker flickers when the player touches a put sticker on the edit screen (similar screen as in FIG. 21), and the sticker can be moved by dragging with the touch pen as described.

When putting or moving a sticker as described, there is no limit to the display position, and the player can freely decorate the screen.

The already put stickers can be deleted. Selecting "Delete" in FIG. 20 and touching an already put sticker on the edit screen enables to erase and remove the sticker.

The edit process of the saved data has been described. The saved contents of the data edited and saved in such a manner can be browsed or deleted by selecting (b) "Diary" or (c) "Delete" on the process selection screen in FIG. 18.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A device (1) for providing, as mini-games, a plurality of preparation processes set up in accordance with a cooking menu and for simulating processes for completing the cooking menu, the device (1) comprising:
a control unit (200) including a processor (201) and a memory (202);
an image processing unit (300) arranged to output data to a display unit (303); and
an input control unit (400) arranged to receive input commands;
**characterised in that:**
the control unit (200) is arranged to provide, as mini-games, a plurality of preparation processes set up in accordance with a cooking menu via the image processing unit (300);
the control unit (200) is arranged to judge and accumulate degrees of achievement in the mini-games based on input commands received by the input control unit (400);
the control unit (200) is arranged to compile the degrees of achievement accumulated in the mini-games after all mini-games are finished and to judge the game result; and
control unit (200) is arranged to display via the image processing unit (300) a tasting character and to perform animation processing to change the expression of the tasting character in accordance with the game result and/or display a comment in accordance with the game result.

2. The device according to claim 1, further comprising:
a database in relation to a plurality of tasting characters; and
the control unit (200) is arranged to make the player select a tasting character before providing a first mini-game in use.

3. The device according to claims 1 or 2, wherein:
the control unit (200) is arranged to grant an item to the player after the displaying the tasting character and store the kinds and the number of granted items for each player in use.

4. The device according to claim 3, wherein:
the control unit (200) is arranged to store the game result played by the player and the tasting character selected by the player; and
provide a stored content view screen for displaying stored game results, tasting characters, and granted items in use.

5. The device according to claim 3, wherein:
the control unit (200) is arranged to display the items based on the input operation of the player without limiting the display positions, the display positions of the granted items being variable on the stored content view screen in use.

6. The device according to any one of claims 1 to 5, wherein:
the control unit (200) is arranged to request the selection of a first game mode or a second game mode, wherein
when the first game mode is selected, the accumulating the degrees of achievement in the mini-games accumulates modified degrees of achievement after modifying the degrees of achievement of the player, and
when the second game mode is selected, the accumulating the degrees of achievement in the mini-games accumulates the degrees of achievement of the player without change, in use.

7. A method for providing, as mini-games, a plurality of cooking preparation processes set up in accordance with a cooking menu and for simulating processes for completing the cooking menu, the method **characterised by**:
providing the mini-games to a player;
judging and accumulating degrees of achievement in the mini-games;
compiling the degrees of achievement accumulated in the mini-games after all mini-games are finished and judging the game result; and
displaying a tasting character and then performing animation processing for changing the expression of the tasting character in accordance with the game result and/or displaying a comment in accordance with the game result.

8. The method according to claim 7, further comprising:
providing a database in relation to a plurality of tasting characters; and
making the player select a tasting character before providing a first mini-game.

9. The method according to claims 7 or 8, further comprising
granting an item to the player after the displaying the tasting character and storing the kinds and the number of granted items for each player.

10. The method according to claim 9, further comprising:
storing the game result played by the player and the tasting character selected by the player; and
providing a stored content view screen for displaying stored game results, tasting characters, and granted items.

11. The method according to claim 10, further comprising
displaying the items based on the input operation of the player without limiting the display positions, the display positions of the granted items being variable on the stored content view screen.

12. The method according to any one of claims 7 to 11, further comprising
requesting the selection of a first game mode or a second game mode, wherein
when the first game mode is selected, the accumulating the degrees of achievement in the mini-games accumulates modified degrees of achievement after modifying the degrees of achievement of the player, and
when the second game mode is selected, the accumulating the degrees of achievement in the mini-games accumulates the degrees of achievement of the player without change.

13. A computer readable recording medium having recorded thereon instructions for performing the method of any of claims 7 to 12.
